# EUROPEAN PATENT SPECIFICATION

(11) **EP 2 012 501 B1**
(45) Date of publication and mention of the grant of the patent: **02.04.2014**
(21) Application number: 08159387.3
(22) Date of filing: 01.07.2008
(51) Int. Cl.: H04L 29/08, H04L 12/18, H04L 1/00, H04L 29/06

(54) **File processing method and apparatus for digital broadcast receiver**
Dateiverarbeitungsverfahren und -vorrichtung für einen Digitalrundfunkempfänger
Procédé de traitement de fichier et appareil pour récepteur de diffusion numérique

(30) Priority: 03.07.2007 KR 20070066431
(43) Date of publication of application: 07.01.2009
(73) Proprietor: Samsung Electronics Co., Ltd., Suwon-si, Gyeonggi-do, 443-742 (KR)
(72) Inventor: SEO, Jeong Wook, Yeongtong-gu, Suwon-si, Gyeonggi-do (KR); KANG, Jae Sung, Yeongtong-gu, Suwon-si, Gyeonggi-do (KR)
(74) Representative: Jenkins, Richard Gavin

(56) References cited:
- EP-A1- 1 562 344
- WO-A2-2006/024948
- PAILA NOKIA M LUBY DIGITAL FOUNTAIN R LEHTONEN TELIASONERA V ROCA INRIA RHONE-ALPES R WALSH NOKIA T: "FLUTE - File Delivery over Unidirectional Transport; rfc3926.txt" IETF STANDARD, INTERNET ENGINEERING TASK FORCE, IETF, CH, 1 October 2004 (2004-10-01), XP015009699 ISSN: 0000-0003

## Description

### BACKGROUND OF THE INVENTION

### Field of the Invention

The present invention relates to a digital broadcast receiver and, in particular, to a file processing method and apparatus for a digital broadcast receiver that is capable of efficiently processing files carried using the FLUTE (File Delivery over Unidirectional Transport) protocol in a mobile broadcast system.

### Description of the Related Art

A digital broadcast receiver is an apparatus that restores original digital data from a broadcast signal transmitted by a broadcast station. The digital data is coded and modulated so as to be broadcasted in the form of a broadcast signal by the broadcast station. The digital broadcast receiver demodulates and decodes the broadcast signal for restoring the original digital data. Accordingly, the digital broadcast receiver is provided with a tuner, a demodulator and a decoder. Recent digital broadcast systems are classified into a digital broadcast systems are classified into a digital multimedia broadcast (DMB) system and a digital video (DVB) system.

These digital broadcast systems provide a plurality of service channels in a given frequency bandwidth, and each service channel carries broadcast program data and program information.

In a case of DVB-Handheld (DVB-H) system, a service channel is multiplexed with audio and video data and program information. The audio and video data are transported using Real Time Transport (RTP) protocol. The FLUTE protocol builds on Asynchronous Layered Coding (ALC) protocol combining Layered Coding Transport (LCT) protocol, and FLUTE packets carry a File Delivery Table (FDT) and Object data.

When downloading the FLUTE-based file, the conventional DVB-H receiver discards all data received prior to the receipt of FDT. This is because the object files carried by the FLUTE packets are analyzed with reference to FDT. Accordingly, as the receipt of the FDT is delayed, more useful data carried by the FLUTE packets are discarded, resulting in delay of FLUTE-based file acquisition.

The Request for Comments document "FLUTE - File Delivery over Unidirectional Transport; RFC 3926.txt" by T. Paila, Nokia, M. Luby, Digital Fountain, R. Lehtonen, Teliasonera V. Roca, Inria Rhone-Alpes, R. Walsh, and Nokia dated October 2004 discloses an experimental protocol for the Internet community defining a protocol for the unidirectional delivery of files over the Internet.

EP 1 562 344 A1 discloses a data receiving system having a unidirectional channel receiver for receiving an electronic file and a File Delivery Table (FDT) of the electronic file through a unidirectional channel, a delivery controller for acquiring location information for specifying a location of the FDT from session information necessary for establishment of a session through the unidirectional channel and a bidirectional channel transmitter/receiver for acquiring the FDT through a bidirectional channel form the location specified by the location information before starting to receive the electronic file through the unidirectional channel.

### SUMMARY OF THE INVENTION

The present invention has been made in an effort to solve the above problems, and the present invention provides a file processing method and apparatus that is capable of efficiently processing files received using the FLUTE protocol.

Also, embodiments of the present invention provide a file processing method and apparatus that is capable of efficiently processing the files received through FLUTE before and after receipt of FDT.

Various respective aspects and features of the invention are defined in the appended claims.

In accordance with an a exemplary embodiment of the present invention, a file processing method for a digital broadcast receiver supporting File Delivery over Unidirectional Transport (FLUTE) protocol includes storing, when receiving a file before receipt of a file delivery table (FDT), the file in the form of a temporary file; registering, when receiving the FDT, records on files described in the FDT to a file record table; processing the temporary file of which record exists in the file record table as a normal file; processing files received after the receipt of the FDT with reference to the file record table; and deleting, when the files of which records are registered to the file record table are completely processed, the records of the files completely processed from the file record table.

In accordance with an exemplary embodiment of the present invention, a file processing method for a digital broadcast receiver includes creating, when receiving a file deliver table (FDT), a file record table to which records of files described in the FDT are registered; processing temporary files stored before receiving the FDT as normal files; determining, when receiving an object file, whether the FDT is received; storing, if the FDT is not received, the object file as the temporary file; processing, if the FDT is received, the object file normally; and deleting, when the object files of which records are registered to the file record table are completely processed, the records of the object files from the file record table.

In accordance with another exemplary embodiment of the present invention, a file processing method for a digital broadcast receiver receiving a file using File Delivery over Unidirectional Transport (FLUTE) protocol and recovering the file using a forward error correction (FEC) includes storing, when receiving a file before receipt of a file delivery table (FDT), the file in the form of a temporary file; registering, when receiving the FDT, records on files described in the FDT to a file record table; processing the temporary file of which record exists in the file record table as a normal file; processing files received after the receipt of the FDT with reference to the file record table; and recovering, when a predetermined number of files are received, an original file from the files by performing FEC decoding on the files.

In accordance with another exemplary embodiment of the present invention, a file processing method for a digital broadcast receiver supporting File Delivery over Unidirectional Transport (FLUTE) protocol includes creating, when receiving a file deliver table (FDT), a file record table to which records of files described in the FDT are registered; processing temporary files stored before receiving the FDT as normal files; determining, when receiving an object file, whether the FDT is received; storing, if the FDT is not received, the object file as the temporary file; processing, if the FDT is received, the object file normally; determining a number of files required for forward error correction (FEC) decoding; determining whether the number of files required for the FEC decoding is received; recovering an original file by performing the FEC decoding on the files; and deleting records of the files successfully decoded from the file record table.

Preferably, the file processing method further includes receiving the FDT through one of multiple networks and discarding the FDT received lager through another network.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating a configuration of a digital broadcast receiver according to an exemplary embodiment of the present invention;
FIG. 2 is a block diagram illustrating a configuration of the broadcast reception unit 110 of FIG. 1;
FIG. 3 is a block diagram illustrating a configuration of the protocol processing unit and the decoding unit of FIG. 1;
FIG. 4 is a diagram illustrating a data format of an Internet Protocol (IP)-based DVB-H system;
FIG. 5 is a diagram illustrating a DVB-H frame structure in which service channels are multiplexed in a time slicing scheme;
FIG. 6 is a flowchart illustrating a file processing method according to an exemplary embodiment of the present invention;
FIG. 7 is a flowchart illustrating an object file processing procedure of the file processing method of FIG. 6;
FIG. 8 is a flow chart illustrating an FDT packet processing procedure of the File processing method of FIG. 6;
FIG. 9 is a diagram illustrating a file reception procedure of a file processing method according to an exemplary embodiment of the present invention;
FIG. 10 is a diagram illustrating an operation of FEC function of a file processing method according to an exemplary embodiment of the present invention;
FIG. 11 is a diagram illustrating a broadcast system for implementing a file processing method according to an exemplary embodiment of the present invention; and
FIG. 12 is a flowchart illustrating a file processing method according to another exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

In the following, various parameters associated with a DVB-H receiver are described in detail to help understanding the present invention. However, it is obvious to those skilled in the art that the DVB-H receiver can be implemented without detailed settings of the parameters and with modified parameters settings.

In order to enable a clear and consistent understanding of detailed description and the claims, basic information on the following terms are provided. Unless otherwise noted, terms are to be understood according to conventional usage by those skilled in the relevant art.

The term "broadcast information" covers all the types of data except for audio and video data that should be processed in real time, e.g. files received by a DVB-H received through the FLUTE. The broadcast information may denote packet streams carrying Electronic Service Guide (ESG) data. The term "file" denotes a data object received through the FLUTE.

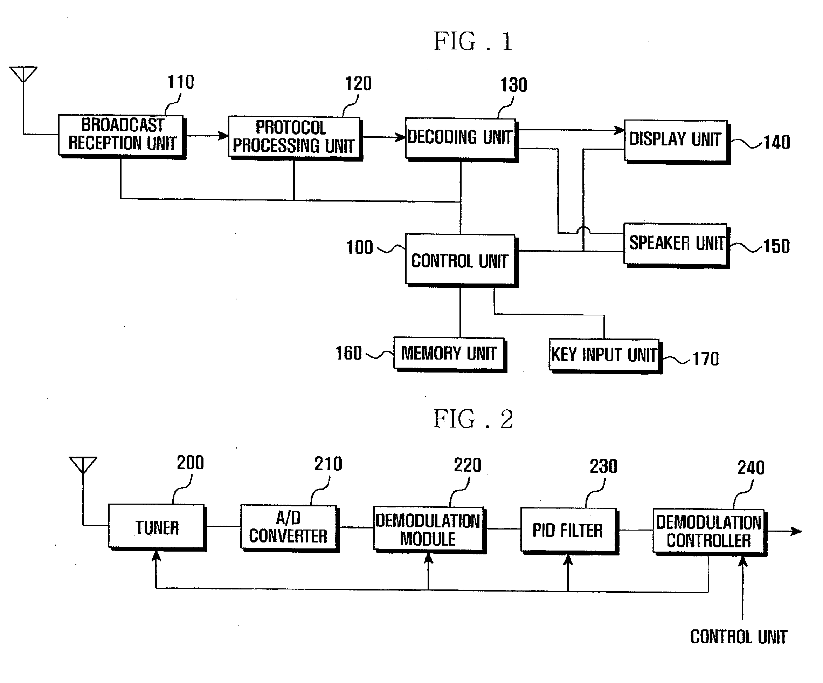

FIG. 1 is a block diagram illustrating a configuration of a digital broadcast receiver according to an exemplary embodiment of the present invention.

Referring to FIG. 1, the broadcast receiver includes a control unit 100, a broadcast reception unit 110, a protocol processing unit 120, a decoding unit 130, a display unit 140, a speaker unit 150, a memory unit 160, and a key input unit 170.

The control unit 100 controls general operations of the broadcast receiver. The key input unit 170 generates key signals corresponding to the keys input by a user. The key signals include user commands such as service channel selection and play commands. The memory unit 160 includes a program memory for storing application programs associated with the operations of the digital broadcast receiver and a data memory for storing data generated during the execution of the application programs. Particularly in this embodiment, the program memory stores a program for processing FLUTE packets.

The broadcast reception unit 110 receives broadcast data on the service channel selected by the user under the control of the control unit 100. The protocol processing unit 120 performs protocol processing on the broadcast data for separately extracting audio and video data and program information from the broadcast data. The program information includes the ESG data. The decoding unit 130 includes an audio decoder and a video decoder. The audio decoder decodes the audio data extracted from the broadcast data received on the main service channel. The video decoder decodes the video data extracted from the broadcast data received on at least one service channel. The decoded video data are displayed on the display unit 140 in the form of a visual image, and the decoded audio data are output through the speaker unit 150 in the form of audible sound wave.

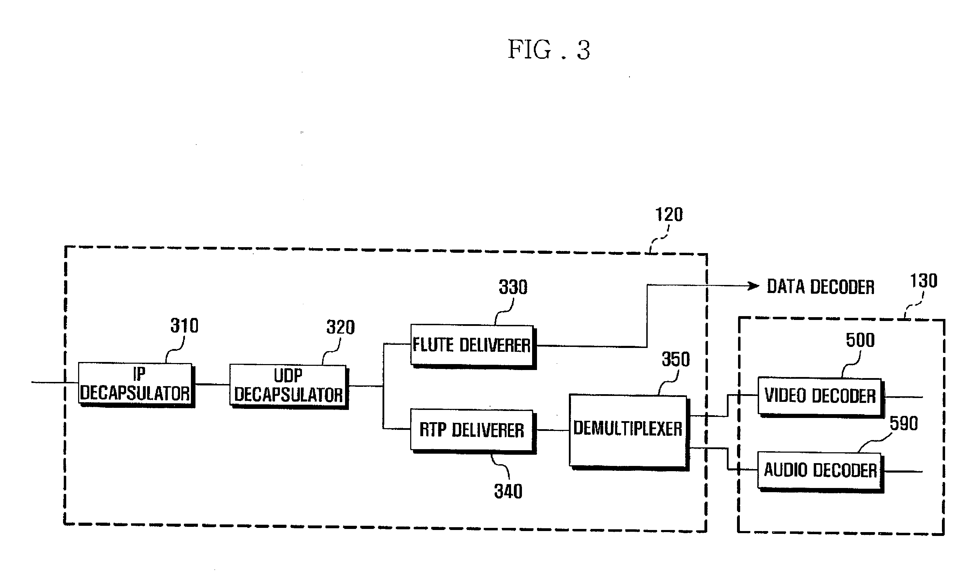

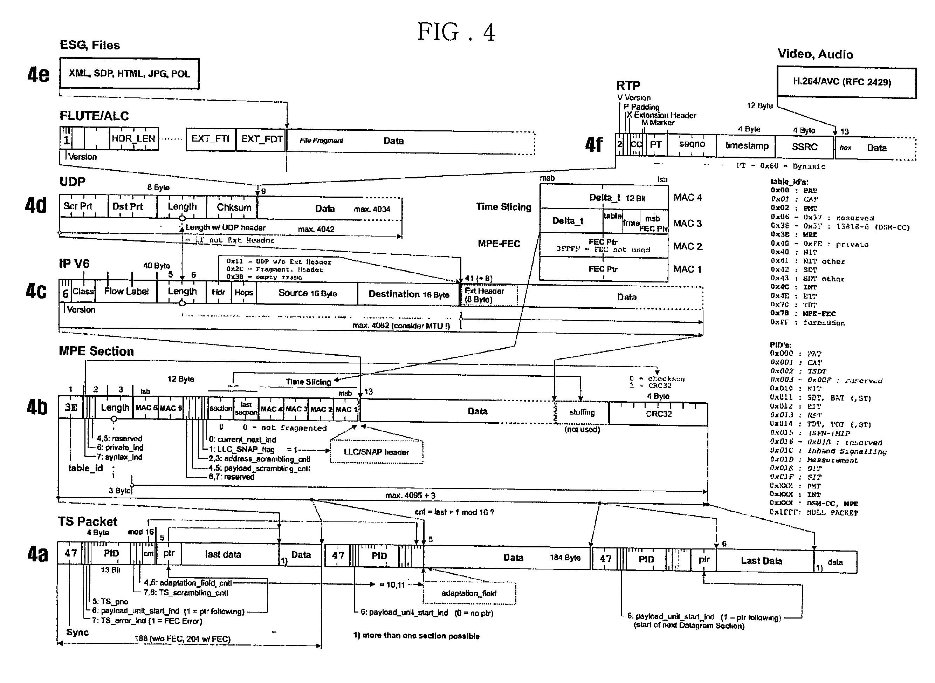

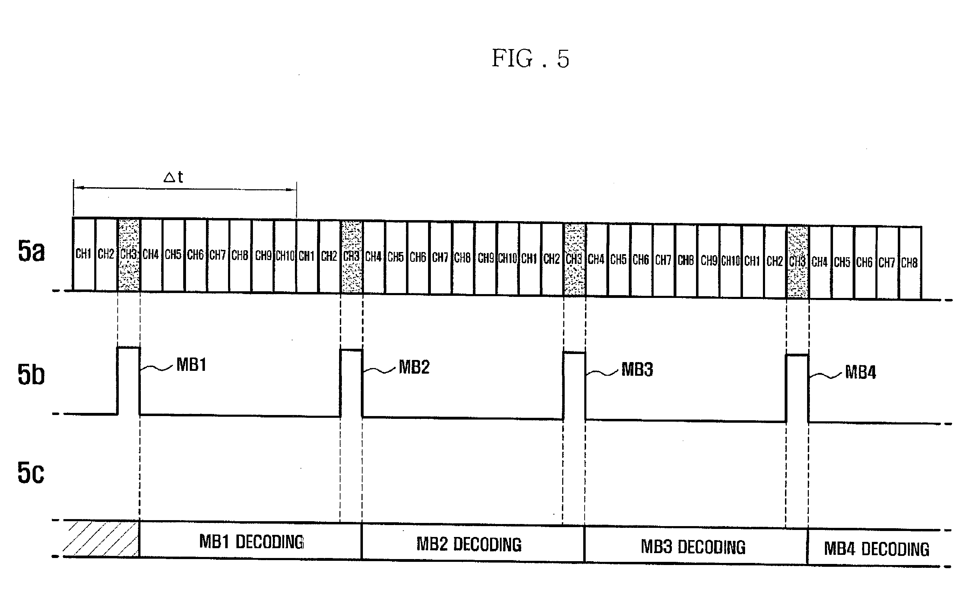

FIG. 2 is a block diagram illustrating a configuration of the broadcast reception unit 110 of FIG. 1, FIG. 3 is a block diagram illustrating a configuration of the protocol processing unit and the decoding unit of FIG. 1, FIG. 4 is a diagram illustrating a data format of an Internet Protocol (IP)-based DVB-H system, and FIG. 5 is a diagram illustrating a DVB-H frame structure in which service channels are multiplexed in a time slicing scheme.

Referring to FIG. 4, the broadcast data of the DVB-H system are structured in the form of Motion Picture Experts Group 2 transport stream (MPEG2-TS), and the MPEG2-TS format is implemented as a packet stream, each packet contains 4 bytes of packet header and 184 bytes of payload. The packet header contains packet synchronization and packet identification (PID) information. The PID can be used as a service identifier for identifying service channel and program data contained in the payload. The payload consists of multi protocol encapsulation (MPE) sections. Each MPE section includes a table identifier (table_ID), MPE forward error correction (MPE-FEC) information for correcting errors of the received data, information for slicing the received data in time. Each MPE contains at least one IP datagram. In FIG. 4, IPv6 datagram is depicted as an example. The IP datagram includes an IP version information, source IP address and destination IP address. The IP datagram consists of user datagram protocol (UDP) units and each UDP unit includes port addresses of the transmitter and receiver. Using the destination IP address the broadcast service can be provided to a specific IP user in an IP datacast rather than the broadcast. The UDP unit contains FLUTE/ALC units and a real time transport protocol (RTP) unit. The FLUTE/ALC unit includes the ESG and files, and the RTP unit includes audio and video data.

The DVB-H system uses the FLUTE protocol for transporting files. The files are comprises ALC/LCT building blocks (refer to RFC 3450 and 3451). The data are actually carried by the the ALC/LCT blocks and encoded by a binary for meta-data or GZIP (refer to RFC 1925). The FLUTE can be used for transporting FDT file, session description protocol (SDP) file, electronic service guide (ESG) file, motion picture file, image file, text file, and short video clip file. The FDT provides information on the files transported through FLUTE.

The FDT contains information such as Transport Object Identifier (TOI), object length, object location, object type, object packet number, etc. The broadcast receiver checks the data with reference to the information provided by the FDT and receives the packets in association with the data.

Referring to FIG. 5, a frame consists of a plurality of service channels that are multiplexed in a time slicing scheme. The frame has a duration (Δt) and is sliced into 10 timeslots. Each time slot is assigned for a service channel. In this embodiment, a term "burst time" is interchangeably used with the frame duration. In this manner, the service channels are transmitted in the frame duration.

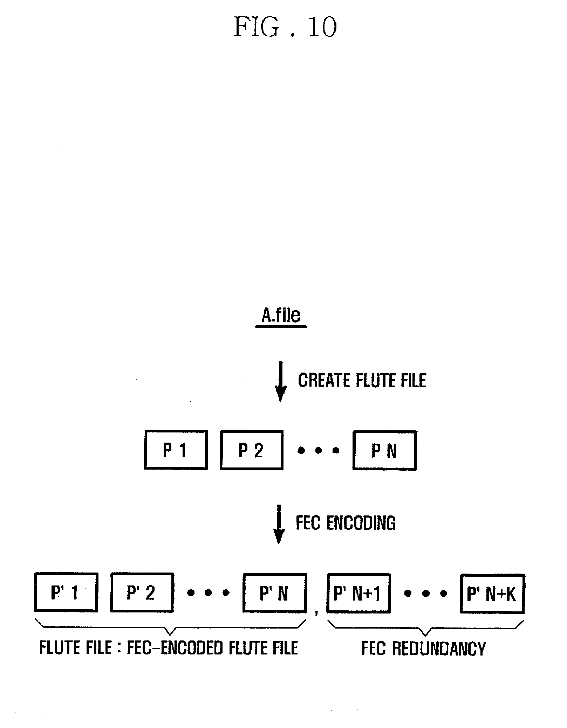

In FIG. 5, 10 service channels CH1 to CH10 are multiplexed in a signal frame and channel 3 (CH3) is selected as a current service channel. In this case, the timeslot represented by the channel 3 is a burst-on time and the timeslots represented by channel 1, channel 2, and channel 4 to channel 10 become burst-off time. The broadcast data of the service channels are transmitted at the respective timeslots for corresponding service channels. When using the time slicing scheme, the broadcast reception unit 110 can predict the burst time of the current service channel and the burst times of other service channels, in this embodiment, the broadcast reception unit 110 receives the broadcast data through the channel 3 (CH3) and the broadcast data are decoded the duration Δt identical with the frame length. The decoded data are output through the display unit 150 as a viewable image. Such a timeslot based-power supply and data decoding technique is called "time slicing technique" or such a timing control method is called "time slicing control."

Referring to FIG. 2, the broadcast reception unit 110 includes a tuner 200 and a data demodulator. The data demodulator includes an analog/digital (A/D) converter 210, a demodulator 220, a PID filter 230, and a demodulation controller 240.

The tuner 200 sets a physical frequency channel for the service channels. The tuner 200 includes a phase-locked loop (PLL) circuit for generating a frequency for the physical channel, a mixer for mixing the received signal and the signal generated by the PLL, and a band-pass filter for passing the frequency of the physical channel.

The demodulation controller 240 controls the tuner 200 on the basis of control signals received from the control unit 100 so as to set the physical channel frequency and the PID of the service channel selected by the PID filter 230.

The control unit 100 analyzes a Program Specific Information/Service information (PSI/SI) output from the broadcast reception unit 120 and SDP information included in an Electronic Service Guide (EPG) for checking the PID, IP, and protocol information of the selected service channel. If the PID filtered by the PID filter 230 is a Network Information Table (NIT), Service Description Table (SDT), and Event Information Table (EIT), the control unit 100 checks the PIDs of the physical channel and service channels from the PSI/SI.

The control unit 100 analyzes the SDP from a FLUTE data (which can be included in the ESG data) so as to check the PID, IP and port information for distinguishing the audio and video data of the service channels. Accordingly, the control unit 100 analyzes the PSI/SI and SDP data so as to determine the PID/ IP and port numbers for the service channels and audio and video data of each service channel.

If a service channel is selected by the user, the control unit 100 outputs channel control data for filtering the PID of the physical channel and service channel to the demodulation controller 240. If the PID of the service channel is received, the demodulation controller 240 sets the tuner 200 to the physical channel frequency for receiving the service channel and sets the PID filter 230 with the PID of the service channel. Accordingly, the tuner 200 receives the broadcast signal of the physical channel frequency.

The A/D converter 210 converts the signal received by the tuner 200 into digital data, and the demodulator 220 performs demodulation on the digital signal output from the A/D converter 210. The demodulator 220 can be implemented as an orthogonal frequency division multiplexer (OFDM) or a coded orthogonal frequency division multiplexer (COFDM). The output data of the demodulator 220 can be a MPEG2-TS packet 4a of FIG. 4. The TS packet contains a PID as an identifier for identifying the service channel. The PID filter 230 passes the data having the PID of the selected service channel from the demodulated IP datagram and transports the PSI/SI to the control unit 100.

The TS packet passed the PID filter 230 may includes the MPE-FEC and time slicing information.

If the TS packet contains the MPE section 4b in FIG. 4, the demodulation controller 240 performs time slicing control on the received burst data. That is, the demodulation controller 240 controls power supply to the tuner 200 and demodulator 220 on the basis of the time slicing information contained in the MPE section. The time slicing information contains information on the burst-on time of the selected and buffering service channel such that the demodulation controller 240 can control to supply to power to the tuner 200 and the demodulator 220 in the burst data duration of the selected service channel using the time slicing information. The demodulation controller 240 also can perform the MPE-FEC function on the data of the selected and buffering service channel output from the PID filter 230 using the MPE section information.

As described above, the demodulation controller 240 controls the tuner 200 on the basis of the channel control data output from the control unit 100 so as to set the physical channel frequency of the selected service channel and sets the PID filter 230 with the PID of the selected service channel. The demodulation controller 24 controls the timing slicing operation for reducing the power consumption of the broadcast reception unit on the basis of the MPE section information 4b of FIG. 4 and performs the MPE-FEC function for improving reception rate by compensating the reception errors. At this time, the data output from the demodulation controller 240 can be an IP datagram 4c of FIG. 4.

FIG. 3 is a block diagram illustrating a configuration of the protocol processing unit of a broadcast receiver according to an exemplary embodiment of the present invention.

Referring to FIG. 3, the protocol processing unit 120 checks the IP and other protocol information of the selected service channel data and extracts the video and audio data from the service channel data. The video decoder includes a video decoder 500 and an audio decoder 590 such that the video decoder 500 decodes the video data output from the protocol processing unit 120 and outputs the video data through the display unit 140 as a viewable image, and the audio decoder 590 decodes the audio data output from the protocol processing unit 120 and output the audio data to the audio processing unit 150. The audio processing unit 150 outputs the audio data output from the audio processing unit 150 through the speaker (SPK) in the form of audible sound wave.

The protocol processing unit 120 includes an IP decapsulator 310, a UDP decapsulator 320, a FLUTE deliverer 330, and an RTP deliverer 340.

The IP decapsulator 310 extracts an IP datagram 4c of FIG. 4 from the MPE section 4b of FIG. 4 and decapsulates the IP datagram so as to check the source and destination IP addresses. The UDP decapsulator 320 extracts a UDP unit 4e of FIG. 4 from the IP datagram and decapsulates the UDP unit to check the source and destination port numbers. If the data carried by the UDP unit is FLUTE/ALC protocol data, the UDP decapsulator 320 transport the FLUTE/ALC protocol data to the FLUTE deliverer 330. If the data carried by the UDP unit is RTP data, the UDP decapsulator 320 transport the RTP data to the RTP deliverer 340. The FLUTE/ALC protocol data may include ESG or other type of data such as XML, SDP, HTML, JPG, and POL. The RTP data may include the audio and video data. The RTP deliverer 340 performs demultiplexing the RTP data so as to output the video data to the video decoder 500 and the audio data to the audio decoder 590.

The control unit 100 can integrate an ESG engine (XML engine and ESG decoder), an SDP parser, and a PSI/SI decoder. The control unit 100 also can integrate a protocol information controller and manager for controlling the protocol process and management. The control unit 100 processes the protocol information and data received from the protocol processing unit 120. That is, the control unit 100 analyzes the PSI/SI table (NIT, SDT, and EIT) extracted by the broadcast reception unit 110 so as to check the PSI/SI according to the MPEG-2 and DVB-SI standards, parses the ESG data received from the protocol processing unit 120, and then controls the overall operation of the broadcast reception unit 110 on the basis of these information. The service channels, ESG per service channel, and audio and video data are identified using the PID, IP, port information. That is, the PSI/SI and SDP is provided with tables defining information on the service channel identifiers, audio and video identifiers, and ESG identifiers. The control unit 100 can identify the service channels, audio data, video data, and ESG data with reference to the decoding result of the PSI/SI and the SDT. The control unit 100 can include the protocol processing unit 410.

When the protocol processing unit 120 demultiplexes and outputs the video and audio data, the video decoder 500 decodes the video data and output the decoded video data through the display unit 140 as a visual image and the audio decoder 590 decodes the audio data and output through the speaker 150 in the form of audible sound wave. The video decoder can be a H.264 standard decoder or a MPEG series decoder, and the audio decoder can be an advanced audio coding (AAC) decoder.

In the above-structured DVB-H broadcast receiver, the audio, video, and broadcast information data are separated by the protocol processing unit 120 and then delivered to the corresponding decoders. Here, the files received through the FLUTE are delivered to the control unit 100 via the FLUTE deliverer 330 of the protocol processing unit 120. The control unit 100 processes the files received through the FLUTE as following.

In the file processing method and apparatus according to an embodiment of the present invention, the broadcast receiver temporarily store the files received before receipt of the FDT in the form of temporary files; records, when if the FDT is received, information on target files indicated by the temporary files in the form of a file record; processes the temporary files and the files following the FDT normally; and finishes processing the files after receiving the target files completely while deleting the temporary files and file record.

A file processing method for a digital broadcast receiver supporting File Delivery over Unidirectional Transport (FLUTE) protocol according to an exemplary embodiment of the present invention includes storing, when receiving a file before receipt of a file delivery table (FDT), the file in the form of a temporary file; registering, when receiving the FDT, records on files described in the FDT to a file record table; processing the temporary file of which record exists in the file record table as a normal file; processing files received after the receipt of the FDT with reference to the file record table; and deleting, when the files of which records are registered to the file record table are completely processed, the records of the files completely processed from the file record table.

Preferably, registering records on files includes generating records of files to be received; processing the temporary files of which records are registered to the file record table; and setting an FDT reception flag positively.

Preferably, the record of file comprises a transport object identifier (TOI), a file name, a file size, and a reception state flag.

Preferably, the file processing method further includes setting the reception state flags of the records of the files successfully processed positively.

Preferably, storing the file in the form of a temporary file includes creating, if the FDT reception flag is negatively, the temporary file with a name entitled the TOI; decoding payload of the file; and storing the decoded payload as the temporary file.

Preferably, processing files received after the receipt of the FDT includes decoding payloads of the files; storing the decoded payloads as a reception file; and setting the reception state flag positively.

Preferably, the file processing method further includes receiving the FDT through at least one backup network as well as a broadcast network; and discarding, when the FDT is received through a network, the FDT received later through another network.

A file processing method for a digital broadcast receiver receiving a file using File Delivery over Unidirectional Transport (FLUTE) protocol and recovering the file using a forward error correction (FEC) according to another exemplary embodiment of the present invention includes storing, when receiving a file before receipt of a file delivery table (FDT), the file in the form of a temporary file; registering, when receiving the FDT, records on files described in the FDT to a file record table; processing the temporary file of which record exists in the file record table as a normal file; processing files received after the receipt of the FDT with reference to the file record table; and recovering, when a predetermined number of files are received, an original file from the files by performing FEC decoding on the files.

Preferably, recovering an original file includes receiving more than the predetermined number of files; and determining a number of files required for performing FEC decoding.

Preferably, the file processing method further includes requesting, when failed decoding the original file, retransmission of the original file through a backup network; and receiving the original file through the backup network.

Preferably, the file processing method further includes turning off, when failed decoding the original file, the broadcast receiver in a predetermined duration; turning on the broadcast receiver after the predetermined duration; and receiving the original file.

Preferably, the file processing method further includes deleting, when the files of which records are registered to the file record table are completely processed, the records of the files completely processed from the file record table.

Preferably, the file processing method further includes receiving the FDT through at least one backup network as well as a dedicated broadcast network; and discarding, when the FDT is received through a network, the FDT received later through another network.

As described above, a FLUTE builds on the ALC combining the LCT, and the FLUTE packet carries information on the FDT and the file objects. The FLUTE packet is structured as shown in table 1.

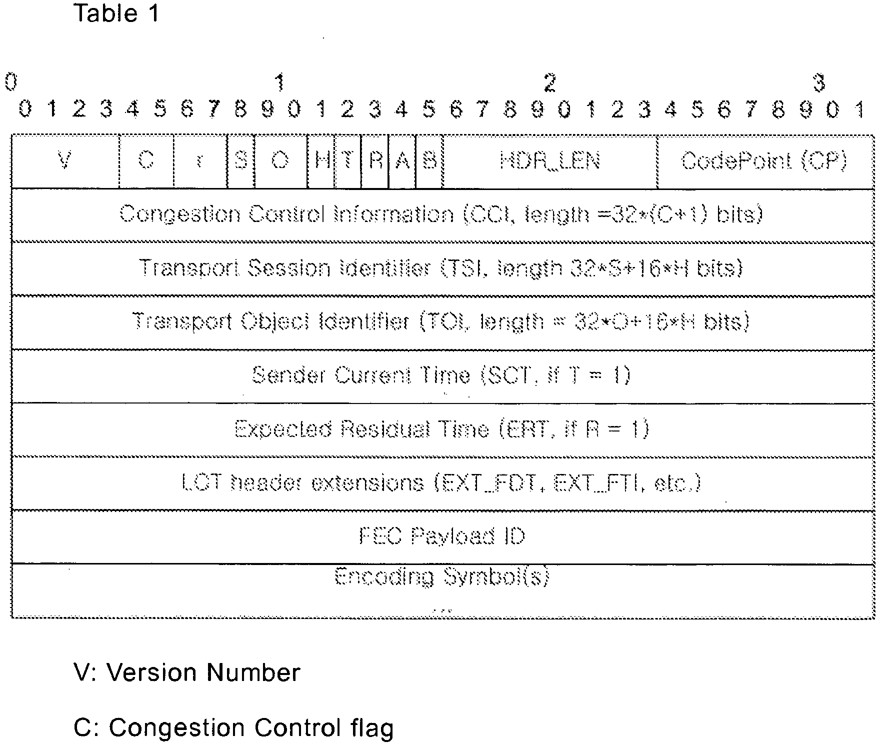

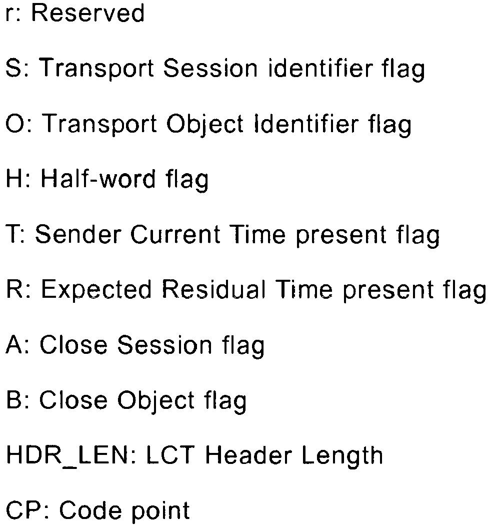

In table 1, the field "A" denotes a close session flag indicating the end of the session, and field "B" denotes a close object flag indicating the end of the object. The Transport Session Identifier (TSI) is used to identify the session, and Transport Object Identifier (TOI) is used to identify the object. Here, an object means a file, and the TOI is set to 0 for the FDT. The FEC Payload ID is used for identifying the FEC encoding of the file. That is, when the FLUTE protocol file is FEC-encoded, the FEC Payload ID is set to 0 by the broadcast station or broadcast server. The broadcast receiver checks the FEC Payload ID for detecting the FEC encoded file. The broadcast receiver receives and decodes a predetermined number of FEC-encoded FLUTE protocol files to recover an original file. The number of FEC-encoded FLUTE protocol files is informed by the FDT file.

The FDT is a FLUTE object of which TOI is set to 0 and defines a number of FLUTE objects to receive. The FDT is a set of file description entries for files. Each file description entry comprises TOI, file name, length, and reception state as shown in table 2. This structure is repeated as much as the number of files. The FDT is deleted after all the files are completely received, and the object files are stored in the memory unit 160 until the FDT is updated.

**Table 2**

| | | | |
|---|---|---|---|
| TOI | File name | Length | Reception state |

Table 3 shows an example of FDT instance in which two objects indicated by TOI = 65537 and TOI = 65538.

**Table 3**

| |
|---|
| <?xml version="1.0" encoding="UTF-8" standalone="no"?> |
| <FDT-Instance Expires="3348708762" ef:FullFDT="true" |
| xmlns ="urn:dvb:ipdc:cdp:flute:fdt:2005" |
| xmlns:ef="urn:dvb:ipdc:esg_flute_extension:2005"> |
| <File Content-Length="19" |
| Content-Location="ESGAccessDescriptor.bin" |
| Content-Type="application/vnd.dvb.ipdcesgaccess" |
| TOI-"65537" |
| Transfer-Length="19"/> |
| <File Content-length="534" |
| Content-Location="ESGProviderDiscovery.xml" |
| Content-Type="text/xml" |
| TOI="65538" |
| Transfer-Length="534"/> |
| </FDT-Instance> |

The exemplary FDT can be structured as in table 4.

**Table 4**

| TOI | File name | Length | Reception state |
|---|---|---|---|
| 65537 | ESGAccessDescription.bin | 19 | 0 |
| 65538 | ESGProviderDiscovery.xml | 534 | 0 |

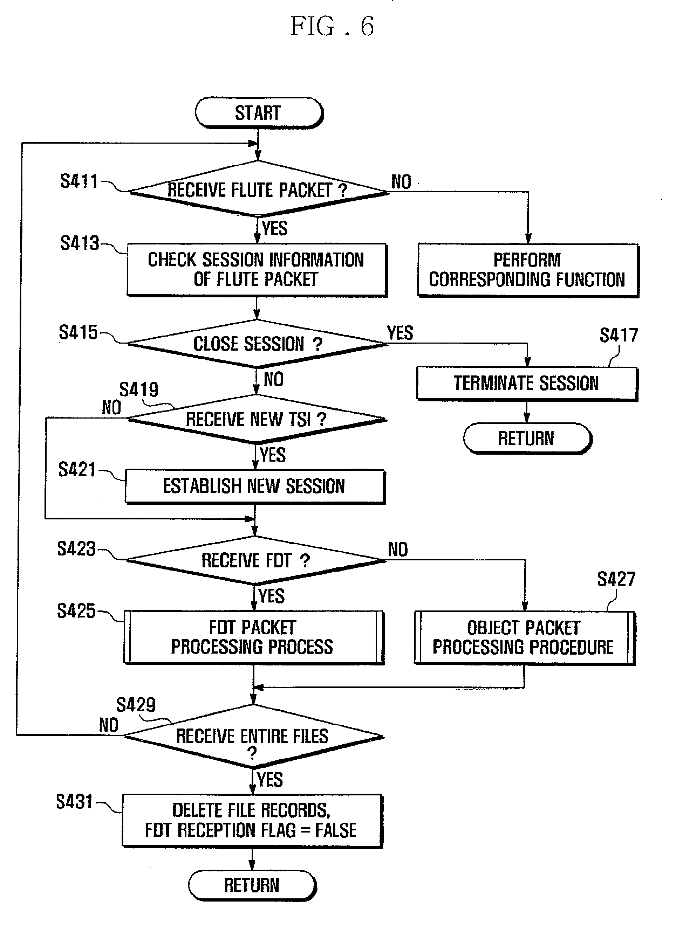

FIG. 6 is a flowchart illustrating a file processing method according to an exemplary embodiment of the present invention.

Referring to FIG. 6, the control unit 100 of the broadcast receiver determines whether a FLUTE packet is received (S411). The FLUTE packet is delivered from the FLUTE deliverer 330 and recognized by the IP address and/or port number. If a FLUTE packet is received, the control unit 100 checks the session information (values of A and TSI) from the header of the FLUTE packet structured as table 1 (S413) and determines whether the session is terminated (S415). Here, if the Close Session flag (A) is set to 1, the control unit 100 determines that the session is terminated. If it is determined that the session is terminated, the control unit 100 performs a session termination routine (S417). In contrast, if it is determined that the session is not terminated, the control unit 100 checks the TSI and determines whether the TSI indicates a new session (S419). If the TSI indicates a new session, the control unit 100 controls such that a new session is established (S421).

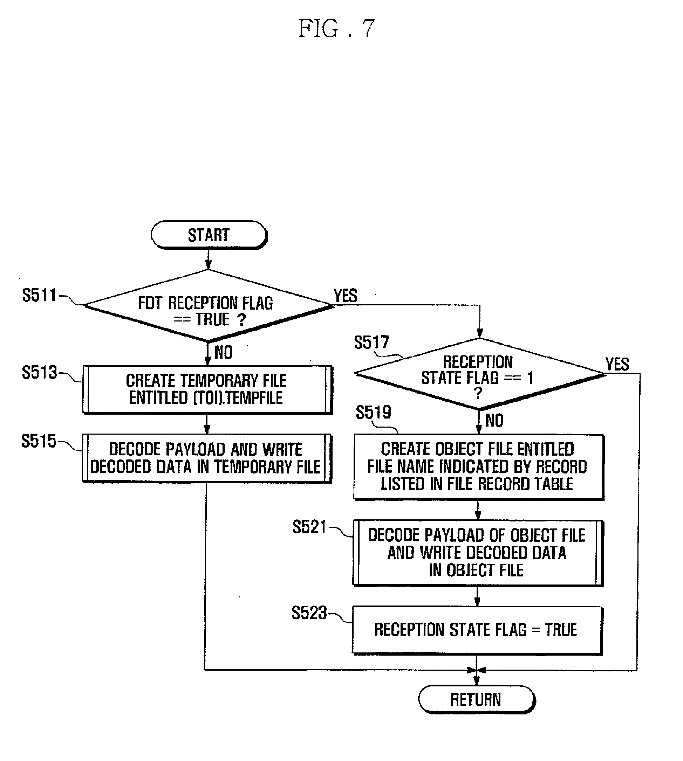

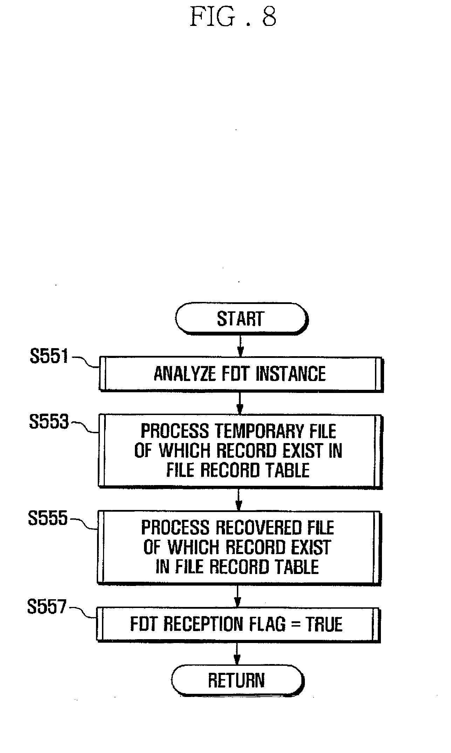

After establishing a new session at step S421 or if the TSI does not indicates a new session at step S419, the control unit 100 checks the TOI to determine whether the FLUTE packet is an FDT packet (S423). Here, the TOI of FDT packet is set to 0, while the TOIs of the object packets are set to non-zero value. If the FLUTE packet is not an FDT packet, the control unit 100 performs an object packet processing procedure (S427). If the FLUTE packet is an FDT packet, the control unit performs an FDT packet processing procedure (S425). The object file processing procedure is described in more detail with reference to FIG. 7, and the FDT file processing procedure is described in more detail with reference to FIG. 8.

FIG. 7 is a flowchart illustrating an object file processing procedure of the file processing method of FIG. 6.

Referring to FIG. 7, if the object file is received, the control unit 100 determines whether an FDT of the session is received (S511). If the FDT is not received yet, the control unit 100 generates a temporary file ((TOI).tempfile) of the TOI of the corresponding object file (S513). Next, the control unit 100 decodes the payload of the object file and stores the decoded data as the temporary file in the memory unit 160 (S515). That is, if the object file is received before receipt of the FDT file, the control unit 100 creates a temporary file entitled the TOI of the object file, decodes the payload of the object file, and stores the decoded data within the memory unit 160 as the temporary file.

If is determined that the FDT is received at step S511, the control unit 100 determines whether a record on the currently received object file exists in a FLUTE file record table (S517). If a record on the current object file exists in the FLUTE file record table, the control unit 100 ends the object file processing procedure. On the other hand, if a record on the current object file does not exist in the FLUTE file record table, the control unit 100 generates a temporary file of the object file entitled the file name recorded in the FLUTE file record (S519), decodes the payload of the object file corresponding to the TOI and stores the decoded payload with the file name (S521). At step S521, when a predetermined number of the object packets are received, the control unit 100 can perform FEC decoding on the object packets to recover the original file. That is, the control unit 110 can perform FEC decoding in unit of predetermined number of object packets in real time according to the FEC coding algorithm rather than waiting for receiving all the object packets. The operation of FEC decoding is described later in more detail. The control unit 100 can check the number of FEC-encoded packets of a session with reference the FDT file. The FDT file contains information of a total number of FEC-encoded object packets such that the broadcast receiver can perform FEC-decoding on the FEC-encoded object packets. The number of FEC-encoded object packets depends on the error rate determined by a system designer.

Next, the control unit 100 records the receipt of the object file within the FLUTE file recode table (S523). That is, if it is determined that file is already received before the receipt of the FDT, the control unit 100 discards the current object file and, otherwise, processes the current object file and records the receipt of the object file.

FIG. 8 is a flow chart illustrating an FDT packet processing procedure of the File processing method of FIG. 6.

Referring to FIG. 8, if a FDT file is received, the control unit 100 adds records on the object files to the FLUTE file record table as in table 2 (S551). Each file record consists of TOI, file name, file size, and reception state flag. According to the type of content of the file, the record may include the TOI, content-location, content-length, and reception state flag=0 (0 indicates that the file is not received). In a case that the FDT file in table 3 is received, the control unit 100 adds the record to the FLUTE file record table as in table 4.

Next, the control unit 100 checks whether a temporary file having the same record as one of the records listed in the FLUTE file record table and processes the temporary file of which the record exists in the FLUTE file record table (S553). As described above, in this embodiment, the object files received before receipt of the FDT file are stored in the forms of temporary files at steps S513 and 515 of FIG. 7 and decodes and records the information on the object files. Accordingly, after adding the records on the object files, the control unit 100 checks whether any of previously stored temporary files ((TOI).tempfile) having the name listed in the FLUTE file record table and, if any, changes the temporary file name into the original file name indicated by the file record and set the reception state flag to 1 (true) (S553). In this manner, the control unit 100 checks all the temporary files with reference to the file records listed on the FLUTE file record table, changes the names of the temporary files of which records exists in the FLUTE file record table into their original names, sets their reception state flags to 1, and erases the temporary files recovered to the original files.

After processing the temporary files, the control unit 100 processes the recovered files of which records exist in the FLUTE file record table (S555). That is, after acquiring the FDT, the control unit 100 deletes the files of which records are not listed in the FLUTE file record table or have different values. In more detail, the control unit 100 checks whether the file names of the files are registered in the FLUTE file record table, and deletes the files of which records are not registered in the FLUTE file record table. Also, the control unit 100 deletes the files of which records, even exist in the FLUTE file record table, have invalid values. That is, the control unit 100 processes the files of which name and size are identical with the record registered in the FLUTE file record table, and sets its reception state flag into 1. This process is performed on every temporary file.

After completely processing the temporary and recovered files with reference to the FDT, the control unit 100 sets an FDT reception flag to true (S557) and ends the FDT file processing procedure.

As described above, upon receipt of the FDT, the control unit 100 generates file records with reference to the FDT. If there are temporary files received before receipt of the FDT, the control unit 100 stores the temporary files with their original names referring to the corresponding records of the FLUTE file record table and changes the reception state flags of the files into 1. After recovering the original files, the control unit 100 compares the information of the recovered files with the records registered in the FLUTE file record table and deletes the files having invalid values and changes the reception state flags of the files having valid values into 1.

Returning to FIG. 6, after processing the object files and FDT file through the procedures depicted in FIGs. 7 and 8, the control unit 100 checks whether all the files are completely received (S429). If not all the files are received, the control unit 100 repeats step S411 for completing the residual files. Whether all the files are received is checked with reference to the reception state flags of the object files of all TOls recorded in the FLUTE file record table. If the entire file is received, the control unit 100 deletes the file records added when the FDT file is received, and sets the FDT reception flag to false (S431).

A sender generates the FDT file including the file information such as TOI, file name, file length, etc. and sends the FDT file and object files sequentially. The broadcast receiver receives the FDT file in advance and then receives the object files following the FDT file. After receiving all the object files the broadcast receiver ends the object file reception procedure. Unlike the conventional object file processing method, the file processing method of the present invention can process the object files received before the receipt of the FDT file.

In the above embodiment, the file processing method of the broadcast receiver stores the object files regardless of the receipt of the FDT file and processes the files received before and after the receipt of the FDT file with reference to the FDT file, resulting in improvement of file processing efficiency.

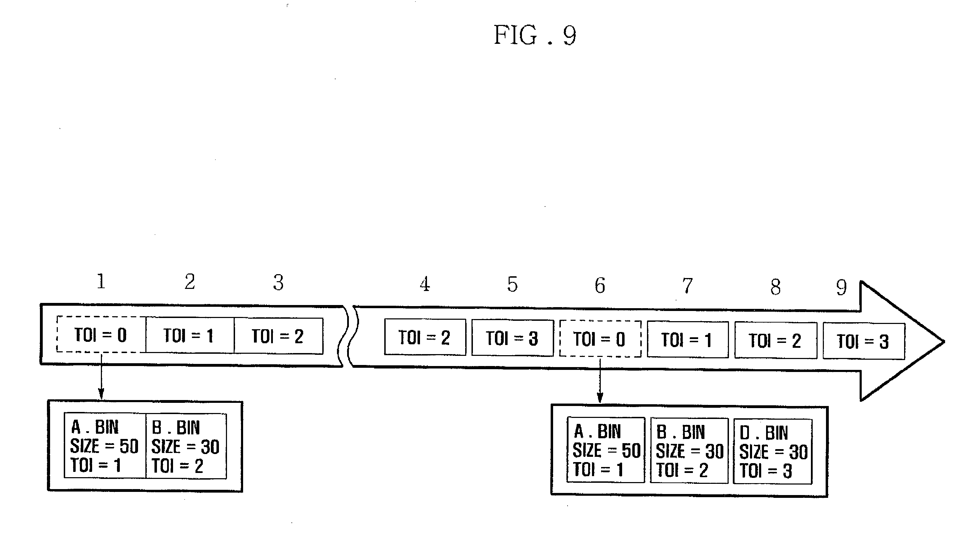

FIG. 9 is a diagram illustrating a file reception procedure of a file processing method according to an exemplary embodiment of the present invention. Table 5 shows an exemplary reception management table for use in the file processing method of this embodiment.

**Table 5**

| Reception Order | FDT reception flag | Temporary File | File Name | FLUTE File Record |
|---|---|---|---|---|
| START | FALSE | NULL | NULL | NULL |
| 1 | TRUE | NULL | NULL | 1#A.BIN#50#0 |
| | | | | 2#B.BIN#30#0 |
| 2 | TRUE | NULL | A.BIN | 1#A.BIN#50#1 |
| | | | | 2#B.BIN#30#0 |
| 3-(1) | TRUE | NULL | A.BIN B.BIN | 1#A.BIN#50#1 |
| | | | | 2#B.BIN#30#1 |
| 3-(2) | FALSE | NULL | A.BIN B.BIN | NULL |
| 4 | FALSE | 2.TEMPFILE | A.BIN B.BIN | NULL |
| 5 | FALSE | 2.TEMPFILE | A.BIN | NULL |
| | | 3.TEMPFILE | B.BIN | |
| 6-(1) | FALSE | 2.TEMPFILE | A.BIN | 1#A.BIN#50#0 |
| | | 3.TEMPFILE | B.BIN | 2#B.BIN#30#0 |
| | | | | 3#D.BIN#30#0 |
| 6-(2) | FALSE | 3.TEMPFILE | A.BIN | 1#A.BIN#50#0 |
| | | | B.BIN(2.TEMPFILE) | 2#B.BIN#30#1 |
| | | | <=RENAME | 3#D.BIN#30#0 |
| 6-(3) | FALSE | NULL | A.BIN | 1#A.BIN#50#0 |
| | | | B.BIN | 2#B.BIN#30#1 |
| | | | 4.BIN(3.TEMPFILE) | 3#D.BIN#30#1 |
| | | | <=RENAME | |
| 6-(3) | TRUE | NULL | A.BIN | 1#A.BIN#50#1 |
| | | | B.BIN | 2#B.BIN#30#1 |
| | | | D.BIN | 3#D.BIN#30#1 |
| 6-(4) | FALSE | NULL | A.BIN | NULL |
| | | | B.BIN | |
| | | | D.BIN | |

Referring to FIG. 9, when the FDT file is received, the control unit 100 performs steps 551 to 553 of FIG. 8 for processing the FDT file. If a packet of TOI=0 is received first, the control unit 100 recognizes that the packet carries the FDT file and generates file records using the FDT file and sets the FDT reception flag to the value "true". Here, it is assumed that the FDT file contains the file records of "1 # A.BIN # 50 # 0" and "2 # B.BIN 30 # 0". With reference to the FDT file, the control unit 100 can recognize the TOls, file names, and file lengths of the files.

If a file of TOI1 is received after acquiring the information on the files, the control unit 100 creates the file name A.BIN referring to the FLUTE file record table, decodes the payload of the file, and stores the decoded file A.BIN within the memory unit 160 through steps S517 to S523. At this time, the corresponding file record is updated into "1 # A.BIN # 50 # 1" in the FLUTE file record table. If the file indicated as TOI2 is received afterward, the control unit 100 also creates the file name B.BIN referring to the FLUTE file record table, decodes the payload of the file, and stores the decoded file B.BIN within the memory unit 160 through steps S517 to S523. Here, the corresponding file record is updated into "2 # B.BIN # 30 # 1" in the FLUTE file record table.

When the file indicated as TOI2 is received, the control unit 100 checks the FLUTE file record table so as to recognizes that all the files are received completely at step S429 and sets the FDT reception flag to false and deletes records on the corresponding files at step S431. As described above, if the FDT file is received already, the control unit 100 adds the file records obtained from the FDT file to the FLUTE file record table and decodes and stores the object files received after receipt of the FDT file, and ends the file processing procedure after processing the last object file registered in the FLUTE file record table.

However, in the case that the object files are received before receipt of the FDT file, the control unit 100 stores the object files as the temporary files and processes the temporary files as normal object files after receipt of the FDT file. This is a case when the object files are received upon the broadcast receiver powers on. The broadcast receivers buffers the object files received before receipt of the FDT file and processes the buffered files upon receipt of the FDT file, resulting in reduction of file processing delay. In FIG. 9, it is assumed that the object file of TOI2 is received prior to the FDT file and the object file A.BIN and B.BIN exist in the memory unit 160.

When the object file of TO12 is received before the receipt of the FDT file, the FDT reception flag is set to false and no record of the object file of TOI2 is registered to the FLUTE file record table. In this case, the control unit 100 recognizes that the FDT file is not received yet at step S511, such that the control unit 100 creates a temporary file "2.temfile" of the object file, decodes the payload of the object file, and stores the decoded object file within the memory unit 160 through steps S513 to S515.

Sequentially, if another object file assigned TOI3 is received, the control unit 100 recognizes that no FDT is received at step S511, such that the control unit 100 creates a temporary file "3.tempfile" of the object file, decodes the payload of the object file, and stores the decoded object file within the memory unit 160 through steps S513 to S515. Accordingly, the memory unit 160 stores the temporary files "2.tempfile" and "3.tempfile" corresponding to the object files indicative by the TOI2 and TOI3.

If a FDT file is received in such a state, the control unit 100 recognizes the receipt of the FDT file at step S423 and performs the FDT file processing procedure at step S425 detailed in FIG. 8. The control unit 100 analyzes the FDT instance and adds the file records of the object files to the FLUTE file record table at step S551. The file records can be expressed as "1 # A.BIN # 50 # 0", "2 # B.BIN # 30 # 0", and "3 # D.BIN # 30 # 0". Next, the control unit 100 processes the temporary files with reference to the record values registered to the FLUTE file record table at step S553. Here, the two temporary files "2.tempfile" and "3.tempfile" exist in the memory unit 160. Accordingly, the control unit 100 processes the "2.tempfile" such that its file record is changed into "2 # B.BIN # 30 # 1" and then processes the "3.tempfile" such that its file record is changed into "3 # D.BIN # 30 # 1". Next, the control unit 100 processes the previously recovered object files with reference to the records listed on the FLUTE file record table at step S555. In the exemplary embodiment, the previously recovered file can be indicated by the record "1 # A.BIN # 50 # 0" listed in the FLUTE file record table. In this case, the control unit 100 compares information on the object file indicated by the TOI1 with the file name and file size of the corresponding record and sets the reception state flag of the corresponding record to 1 such that the record is modified as "1 # A.BIN # 50 # 1 ".

In the above manner, the control unit 100 processes the temporary files and the previously recovered object files sequentially and then sets the FDT received flag to true at step S559 such that the FDT file processing procedure completes. At this time, if the object files expected to be received are identical with the previously received object files, the control unit 100 regards that all the object files are received at step S429 and deletes the records of the corresponding object files from the FLUTE file record table and resets the FDT reception flag to false at step S429. In this case, the control unit 100 skips receiving the objects files indicated by TOI = 1, 2, and 3.

As described above, the file processing method according to the above embodiment stores the object files received prior to the FDT file as temporary files and processes the the temporary files normally after receiving the FDT file, resulting in reduction of file processing delay. In this manner, the object files can be processed upon receiving the FDT file without waiting for the receipt of object files. The object files can be the data such as ESG. Since the ESG is updated irregularly and may have a large volume. Accordingly, the file processing method of the present invention can be efficiently applied for updating the files such as ESG.

Also, the file processing method according to the above embodiment enables reducing the time for receiving the object files dramatically using the FEC function. In more detail, the control unit 100 of the broadcast receiver processes the objects files regardless of the receipt of FDT file such that the object files received before receipt of the FDT can be normally processed. At this time, the control unit 100 ignores the errors occurs while receiving the object files and corrects the errors through the FEC decoding process. In other words, the control unit 100 performs FEC-decoding in unit of predetermined number of FLUTE packets. At this time, the FLUTE packets can be received together with redundant packets related to the FEC encoding. The number of FLUTE packets can be determined on the basis of the FDT file, type of the FEC algorithm, and preset error rate policy. The FDT file can be received as FLUTE protocol file which is not FEC-encoded. The original file recovered through the FEC decoding process is stored in the memory unit 160 and used under the control of the control unit 100. In a case that the the original file recovery fails even through the FEC decoding process, i.e. when the packet loss exceeds the tolerant error rate, the control unit 100 may request retransmission of the lost packet to the sender, e.g. broadcast station or broadcast server through another bidirectional communication network. For this purpose, the broadcast receiver is preferably configured to utilize a mobile communication network. In this case, the control unit 100 may request the packet (file) retransmission to the broadcast station using a mobile communication network service such as messaging service. Upon receiving a packet retransmission request message, the broadcast station or broadcast server may transmit the packets (or file) requested by the broadcast receiver through the mobile communication network. At this time, the file can be any type of file as well as FLUTE protocol file that the broadcast receiver can demodulate.

As described above, the file processing method according to this embodiment uses the FEC function such that there is no need to wait for receiving entire packets but a predetermined number of packets, whereby the broadcast reception unit is activated during the receipt of the packets which can be FEC-decoded, resulting in reduction of power consumption. If the FEC-decoding fails, the broadcast network is likely to be in bad conditions. In this case, the broadcast receiver powers off and attempts to receive the lost files through a backup communication network, thereby controlling the power consumption of the broadcast reception unit.

Now the FEC function is described in more detail in association with the file processing method of the present invention with reference to the drawings.

FIG. 10 is a diagram illustrating an operation of FEC function of a file processing method according to an exemplary embodiment of the present invention.

In this embodiment, the sender (e.g., broadcast station or broadcast server) splits a file into FLUTE packets and performs FEC encoding on the FLUTE packets. Preferably, the sender generates an FDT containing information on the file. The broadcast receiver receives the FDT file and controls such that a predetermined number of FEC-encoded FLUTE packets are received and decoded. The broadcast receiver can process files received before and after the receipt of the FDT file in the above-described manner.

Referring to FIG. 10, the sender equipped with the FEC function splits a file "A.file" into a plurality of packets P1, P2, ..., PN according to the FLUTE protocol. Next, the sender performs encoding on the packets so as to output FEC encoding symbols P'1, P'2, ..., P'N, ..., P'N+K". Here, P'N+1, ..., P'N+K are redundant symbols generated according to the FEC encoding. The FEC encoding symbols P'1, P'2,..., P'N may differ from the packets P1, P2, ... , PN in contents. The sender generates and sends a FDT file containing information on the packets. The FDT file is used, at the broadcast receiver, for determining a number of FEC encoding symbols to be received.

The broadcast receiver recognizes the number of FEC encoding symbols using the FDT file. The number of FEC encoding symbols is determined according to the FEC algorithm and error rate policy defined by a system designer. Here, it is assumed that N FEC encoding symbols are decoded at a time. Accordingly, with the N+K FEC encoding symbols, the broadcast receiver starts FEC decoding when N FEC encoding symbols are received. The broadcast receiver can recover the A.file by performing FEC decoding on the N FEC encoding symbols. If the broadcast receiver fails receiving the N FEC encoding symbols or fails decoding the N FEC encoding symbols due to errors, it controls to disable the broadcast reception unit and request retransmission of the A.file through a backup network to the broadcast server (i.e., the sender). The FEC function can be implemented with a RAPTOR code, LDPC-FEC code, Reed-Solomon code, or Turbo code.

The FLUTE packets are transmitted with FEC payload ID as shown in table 1 such that the broadcast receiver determines whether to perform FEC decoding on the FLUTE packets with reference to the FEC payload ID.

Although it is described that the broadcast receiver requests the file retransmission through the backup network when it has failed FEC decoding, the present invention is not limited thereto. For example, the broadcast receiver can be configured to power off the broadcast reception unit when it fails FEC decoding and power on the broadcast reception unit after a predetermined time interval for receiving packets again.

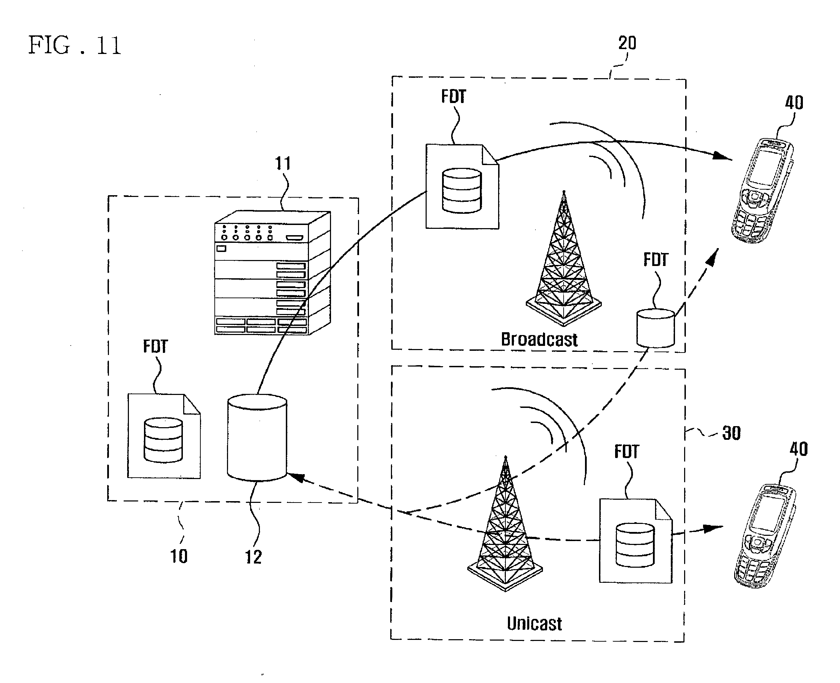

FIG. 11 is a diagram illustrating a broadcast system for implementing a file processing method according to an exemplary embodiment of the present invention. In this embodiment, a backup network is used for requesting a retransmission of files (or packets).

In the following, it is assumed that the backup network is a wireless communication network such as IP-based 3^{rd} Generation (3G) network including WiBro and cellular network including High Speed Downlink Packet Access (HSDPA).

Referring to FIG. 11, the broadcast system includes a file transmission server 10, a broadcast network 20, a backup network 30, and broadcast receivers 40.

The file transmission server 10 broadcasts a broadcast stream over the broadcast network 20 such that the broadcast receivers 40 receive the broadcast stream. The file transmission server 10 also broadcasts files including FDT file over the broadcast network 20. The file transmission server 10 is configured so as to enable transmitting the files to the broadcast receiver through the backup network 30 when required. When it is requested to retransmit the FDT file by a broadcast receiver 40, the file transmission server 10 transmits the FDT file to the broadcast receiver 40. For this purpose, the file transmission server 10 is provided with a server terminal 11 and a database 12.

The broadcast network 20 includes a plurality of base stations for broadcasting the broadcast stream. The broadcast network 20 broadcasts the broadcast contents produced by the contents providers in the form of broadcast streams on corresponding service channel together with the FDT file.

The backup network 30 is a communication network supporting voice communication, video conference, and internet access services. For this purpose, the backup network is implemented with communication protocols supporting access to base stations and internet servers. The backup network 30 supports bidirectional communication. That is, the backup network 30 forwards the FDT request message received from the broadcast receiver 40 to the file transmission server 10 and relays the FDT received from the file transmission server 10 to the broadcast receiver 40.

The broadcast receiver 40 can receive the FDT file and information such as ESG data describing the FDT file through the broadcast network 200. The broadcast receiver 40 also can request FDT file to the file transmission server 10 and received the FDT file through the backup network 30. That is, the broadcast receiver can receive ESG data through the broadcast network 20 and the FDT file associated with the ESG data through the broadcast network 20 or the backup network 30 such that the broadcast receiver can process the ESG data using the FDT file received first.

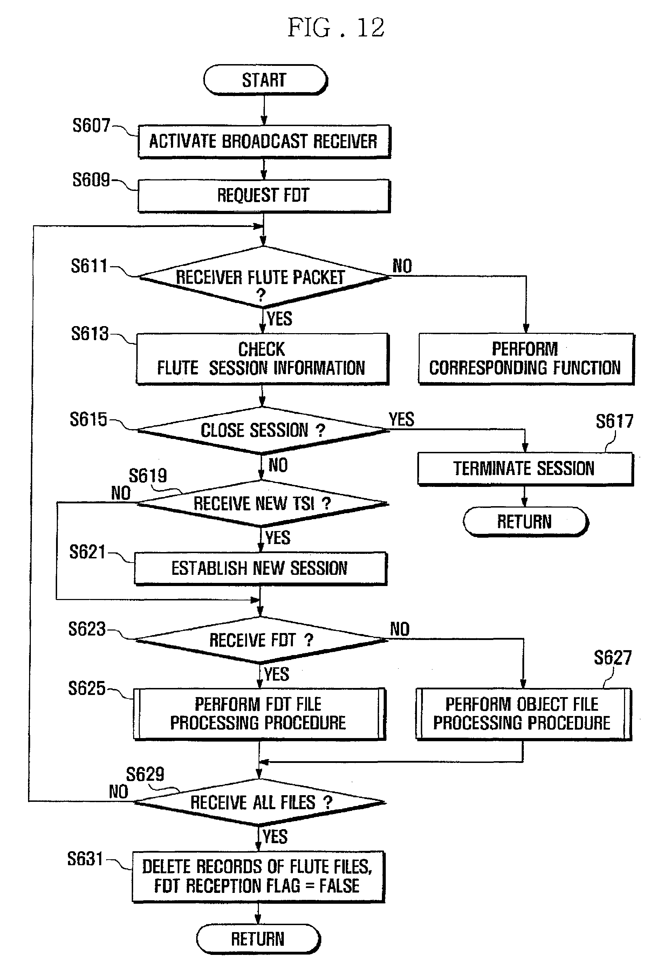

FIG. 12 is a flowchart illustrating a file processing method according to another exemplary embodiment of the present invention. In this embodiment, the file processing method is described with reference to the broadcast receiver 40 depicted in FIG. 1.

Referring to FIG 12, the control unit 100 detects the activation of the broadcast receiver 40 (S607) and transmits a FDT file request message to the file transmission server 100 via the backup network 30 (S609). At this time, the FDT file request message can be transmitted with the broadcast receiver ID. The broadcast receiver ID can be a phone number and/or IP address. After transmitting the FDT file request message, the control unit 100 determines whether a FLUTE packet is received (S611). The FLUTE packet is delivered from the FLUTE deliverer 330 and checked with reference to the IP address or port number contained in the packet. When a FLUTE packet is received, the control unit 100 checks FLUTE session information (S613) and determines whether the FLUTE session is closed on the basis of the FLUTE session information (S615). If it is determined that the FLUTE session is closed, the control unit 100 performs a session termination processing routine (S617) and, otherwise, checks whether the TSI indicates a new session (S619). If the TSI indicates a new session, the control unit 100 establishes a new session (S621).

After establishing the new session at step S621 or if it is determined that the session is closed at step S619, the control unit 100 determines whether a FDT file is received (S623). The FDT file can be received through the broadcast network 20 or the backup network 30. The control unit 100 checks the TOI of the packet and processes the packet for recover an object file with reference to the FDT file received first (S625).

If the FDT file is not received yet at step S623, the control unit 100 performs the object file processing procedure as shown in FIG. 7 so as to store the object files in the form of temporary files (S627). In contrast, if the FDT file is received already, the control unit 100 performs the FDT file processing procedure as shown in FIG. 8 so as to process the temporary files corresponding to the object files normally.

As described above, the file processing method according to this embodiment enables receiving FDT file through a backup network and the ESG data and FDT file through a broadcast network, thereby acquiring the FDT file quickly, resulting in reduction of accumulation of temporary files and fast ESG update.

Although exemplary embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

As described above, the file processing method of the present invention enables a broadcast receiver to receive files quickly, resulting in fast update of information such as ESG efficiently.

## Claims

1. A file processing method for a digital broadcast receiver supporting File Delivery over Unidirectional Transport (FLUTE) protocol, comprising: establishing (S421) a transport session;
Storing (S513), when receiving using FLUTE a file before receipt of a file delivery table (FDT), the file in the form of a temporary file;
Registering (S519), when receiving using FLUTE the FDT, records on files described in the FDT to a file record table;
processing (S553) the temporary file of which record exists in the file record table;
processing (S521) files received using FLUTE after the receipt of the FDT with reference to the file record table; and
deleting (S431), when the files of which records are registered to the file record table are completely processed and before the transport session is terminated, the records of the files completely processed from the file record table.

2. The file processing method of claim 1, wherein registering records on files comprises:
generating (S551) records of files to be received;
processing (S553) the temporary files of which records are registered to the file record table; and
setting (S557) an FDT reception flag positively.

3. The file processing method of claim 2, wherein the record of file comprises a transport object identifier (TOI), a file name, a file size, and a reception state flag.

4. The file processing method of claim 3, further comprising setting the reception state flags of the records of the files successfully processed positively.

5. The file processing method of claim 3, wherein storing the file in the form of a temporary file comprises:
Creating (S513), if the FDT reception flag is negatively, the temporary file with a name entitled the TOI;
decoding payload (S515) of the file; and
storing (S515) the decoded payload as the temporary file.

6. The file processing method of claim 5, wherein processing files received after the receipt of the FDT comprises:
decoding (S521) payloads of the files;
storing the decoded payloads as a reception file; and
setting (S523) the reception state flag positively.

7. The file processing method of claim 1, further comprises:
receiving the FDT through at least one backup network as well as a broadcast network; and
discarding, when the FDT is received through a network, the FDT received later through another network.

8. The file processing method of claim 1, including recovering, when a predetermined number of object packets are received, an original file from the files by performing forward error correction (FEC) decoding on the object packets.

9. The file processing method of claim 8, wherein recovering an original file comprises:
receiving more than the predetermined number of files; and
determining a number of files required for performing FEC decoding.

10. The file processing method of claim 8, further comprising:
requesting, when failed decoding the original file, retransmission of the original file through a backup network; and
receiving the original file through the backup network.

11. The file processing method of claim 8, further comprising:
turning off, when failed decoding the original file, the broadcast receiver in a predetermined duration;
turning on the broadcast receiver after the predetermined duration; and
receiving the original file.

## Patentansprüche

1. Dateiverarbeitungsverfahren für einen Digitalrundfunkempfänger, der das FLUTE-(File Delivery over Unidirectional Transport)-Protokoll unterstützt, das Folgendes beinhaltet:
Einrichten (S421) einer Transportsitzung;
Speichern (S513), beim Empfangen einer Datei mit FLUTE vor dem Empfang einer Dateiübertragungstabelle (FDT), der Datei in Form einer temporären Datei;
Registrieren (S519), beim Empfangen der FDT mit FLUTE, von Datensätzen über Dateien, die in der FDT beschrieben sind, in einer Dateidatensatz-Tabelle;
Verarbeiten (S553) der temporären Datei, von der Datensätze in der Dateidatensatz-Tabelle existieren;
Verarbeiten (S521) von Dateien, die nach dem Empfang der FDT mit FLUTE empfangen wurden, mit Bezug auf die Dateidatensatz-Tabelle; und
Löschen (S431), wenn die Dateien, von denen Datensätze in der Dateidatensatz-Tabelle registriert sind, vollständig verarbeitet sind und vor Beendigung der Transportsitzung, der Datensätze der vollständig verarbeiteten Dateien aus der Dateidatensatz-Tabelle.

2. Dateiverarbeitungsverfahren nach Anspruch 1, wobei das Registrieren von Datensätzen über Dateien Folgendes beinhaltet:
Erzeugen (S551) von Datensätzen von zu empfangenden Dateien;
Verarbeiten (S553) der temporären Dateien, von denen Datensätze in der Dateidatensatz-Tabelle registriert sind; und
Positivsetzen (S557) eines FDT-Empfangen-Flags.

3. Dateiverarbeitungsverfahren nach Anspruch 2, wobei der Dateidatensatz eine TOI (Transport Object Identifier), einen Dateinamen, eine Dateigröße und einen Empfangszustandsflag umfasst.

4. Dateiverarbeitungsverfahren nach Anspruch 3, das ferner das Positivsetzen der Empfangszustandsflags der Datensätze der erfolgreich verarbeiteten Dateien beinhaltet.

5. Dateiverarbeitungsverfahren nach Anspruch 3, wobei das Speichern der Datei in Form einer temporären Datei Folgendes beinhaltet:
Erzeugen (S513), wenn der FDT-Empfangen-Flag negativ ist, der temporären Datei mit dem Namen TOI;
Decodieren der Nutzlast (S515) der Datei; und
Speichern (S515) der decodierten Nutzlast als die temporäre Datei.

6. Dateiverarbeitungsverfahren nach Anspruch 5, wobei das Verarbeiten von nach dem Empfang der FDT empfangenen Dateien Folgendes beinhaltet:
Decodieren (S521) von Nutzlasten der Dateien;
Speichern der decodierten Nutzlasten als Empfangsdatei; und
Positivsetzen (S523) des Empfangszustandsflags.

7. Dateiverarbeitungsverfahren nach Anspruch 1, das ferner Folgendes beinhaltet:
Empfangen der FDT durch wenigstens ein Backup-Netz sowie ein Rundfunknetz; und
Verwerfen, wenn die FDT durch ein Netz empfangen wird, der später durch ein anderes Netz empfangenen FDT.

8. Dateiverarbeitungsverfahren nach Anspruch 1, das das Wiederherstellen, nach dem Empfang einer vorbestimmten Anzahl von Objektpaketen, einer ursprünglichen Datei von den Dateien durch Durchführen einer FEC-(Forward Error Correction)-Decodierung an den Objektpaketen beinhaltet.

9. Dateiverarbeitungsverfahren nach Anspruch 8, wobei das Wiederherstellen einer ursprünglichen Datei Folgendes beinhaltet:
Empfangen von mehr als der vorbestimmten Anzahl von Dateien; und
Ermitteln einer Anzahl von Dateien, die zum Ausführen von FEC-Decodierung benötigt werden.

10. Dateiverarbeitungsverfahren nach Anspruch 8, das ferner Folgendes beinhaltet:
Anfordern, wenn die ursprüngliche Datei nicht erfolgreich decodiert wurde, einer Neuübertragung der ursprünglichen Datei durch ein Backup-Netz; und
Empfangen der ursprünglichen Datei durch das Backup-Netz.

11. Dateiverarbeitungsverfahren nach Anspruch 8, das ferner Folgendes beinhaltet:
Abschalten, wenn die ursprüngliche Datei nicht erfolgreich decodiert wurde, des Rundfunkempfängers nach einer vorbestimmten Zeit;
Einschalten des Rundfunkempfängers nach der vorbestimmten Zeit; und
Empfangen der ursprünglichen Datei.

## Revendications

1. Procédé de traitement de fichiers pour un récepteur de diffusions numériques prenant en charge un protocole « File Delivery over Unidirectional Transport » (FLUTE), comprenant les opérations consistant à :
établir (S421) une session de transport ;
lors de la réception d'un fichier en utilisant FLUTE avant la réception d'une table de délivrance de fichiers (FDT), stocker (S513) le fichier sous la forme d'un fichier temporaire ;
lors de la réception de la FDT en utilisant FLUTE, enregistrer (S519) dans une table d'enregistrement de fichiers des archives relatives à des fichiers décrits dans la FDT ;
assurer le traitement (S553) du fichier temporaire dont une archive existe dans la table d'enregistrements de fichiers ;
assurer le traitement (S521) de fichiers reçus en utilisant FLUTE, après la réception de la FDT, par rapport à la table d'enregistrement de fichiers ; et
effacer (S431), dans la table d'enregistrement de fichiers, les archives de fichiers entièrement traités, lorsque les fichiers dont les archives sont enregistrées dans la table d'enregistrement de fichiers sont entièrement traités et avant que la session de transport ne soit terminée.

2. Procédé de traitement de fichiers selon la revendication 1, l'enregistrement d'archives relatives à des fichiers comprenant les opérations consistant à :
générer (S551) des archives de fichiers destinés à être reçus ;
traiter (S553) les fichiers temporaires dont les archives sont enregistrées dans la table d'enregistrement de fichiers ; et
régler (S557) un indicateur de réception FDT sur le mode positif.

3. Procédé de traitement de fichiers selon la revendication 2, l'archive du fichier comprenant un identifiant d'objet de transport (TOI), un libellé de fichier, une taille de fichier, et un indicateur d'état de réception.

4. Procédé de traitement de fichiers selon la revendication 3, comprenant en outre l'opération consistant à régler sur le mode positif les indicateurs d'état de réception pour les archives des fichiers ayant été traités de façon satisfaisante.

5. Procédé de traitement de fichiers selon la revendication 3, le stockage du fichier sous la forme d'un fichier temporaire comprenant les opérations consistant à :
créer (S513) le fichier temporaire avec un libellé intitulé TOI, si l'indicateur de réception FDT est négatif ;
décoder la charge utile (S515) du fichier ; et
stocker (S515) la charge utile décodée en tant que fichier temporaire.

6. Procédé de traitement de fichiers selon la revendication 5, le traitement des fichiers reçus après la réception de la FDT comprenant les opérations consistant à :
décoder (S521) les charges utiles des fichiers ;
stocker les charges utiles décodées en tant que fichier de réception ; et
régler (S523) l'indicateur d'état de réception sur le mode positif.

7. Procédé de traitement de fichiers selon la revendication 1, comprenant en outre les opérations consistant à :
recevoir la FDT par l'intermédiaire d'au moins un réseau de secours ainsi que par l'intermédiaire d'un réseau de diffusion ; et
supprimer la FDT reçue ultérieurement par l'intermédiaire d'un autre réseau, si la FDT a été reçue par l'intermédiaire d'un réseau.

8. Procédé de traitement de fichiers selon la revendication 1, incluant l'opération consistant à récupérer, une fois qu'un nombre prédéterminé de paquets objets a été reçu, un fichier initial à partir des fichiers grâce à la réalisation d'un décodage de correction d'erreurs sans voie de retour (FEC) sur les paquets objets.

9. Procédé de traitement de fichiers selon la revendication 8, la récupération d'un fichier initial comprenant les opérations consistant à :
recevoir un nombre plus grand que le nombre prédéterminé de fichiers ; et
déterminer un nombre de fichiers requis pour réaliser un décodage FEC.

10. Procédé de traitement de fichiers selon la revendication 8, comprenant en outre les opérations consistant à :
demander la retransmission du fichier initial par l'intermédiaire d'un réseau de secours, lors d'un échec de décodage du fichier initial ; et
recevoir le fichier initial par l'intermédiaire du réseau de secours.

11. Procédé de traitement de fichiers selon la revendication 8, comprenant en outre les opérations consistant à :
mettre hors circuit le récepteur de diffusion pendant une durée prédéterminée, lors d'un échec de décodage du fichier initial ;
mettre en circuit le récepteur de diffusion après la durée prédéterminée ; et
recevoir le fichier initial.
